(19) **Europäisches Patentamt**

**European Patent Office**

**Office européen des brevets**

(11) **EP 0 977 761 B1**

(12) **EUROPÄISCHE PATENTSCHRIFT**

(45) Veröffentlichungstag und Bekanntmachung des Hinweises auf die Patenterteilung:
**11.12.2002  Patentblatt 2002/50**

(51) Int Cl.7: **C07F 13/00**

(21) Anmeldenummer: **98917102.0**

(22) Anmeldetag: **31.03.1998**

(86) Internationale Anmeldenummer:
**PCT/EP98/01865**

(87) Internationale Veröffentlichungsnummer:
**WO 98/047907 (29.10.1998 Gazette 1998/43)**

(54) **DIREKTSYNTHESE VON ORGANORHENIUMOXIDEN AUS RHENIUMHALTIGEN VERBINDUNGEN**

DIRECT SYNTHESIS OF ORGANO-RHENIUM OXIDES FROM COMPOUNDS CONTAINING RHENIUM

SYNTHESE DIRECTE D'OXYDES D'ORGANORHENIUM A PARTIR DE COMPOSES CONTENANT DU RHENIUM

(84) Benannte Vertragsstaaten:
**AT BE CH DE ES FR GB IT LI LU NL PT SE**

(30) Priorität: **24.04.1997  DE 19717178**

(43) Veröffentlichungstag der Anmeldung:
**09.02.2000  Patentblatt 2000/06**

(73) Patentinhaber: **Degussa AG**
**40474 Düsseldorf (DE)**

(72) Erfinder:
 • **FISCHER, Richard, Walter**
  **D-65812 Bad Soden (DE)**
 • **HERRMANN, Wolfgang, Anton**
  **D-85354 Freising (DE)**
 • **KRATZER, Roland**
  **D-85356 Freising (DE)**

(56) Entgegenhaltungen:
**EP-A- 0 373 488      DE-A- 3 902 357**

 • **CHEMICAL ABSTRACTS, vol. 111, no. 1, 3.Juli 1989 Columbus, Ohio, US; abstract no. 7580, LONGLEY, CINDY J. ET AL: "Alkylimido and oxo aryls of rhenium. X-ray structures of bis(tert-butylimido)dichloro(o-tolyl)rheni um and bis(2,6-dimethylphenyl)dioxometal, metal = rhenium and osmium" XP002069570 & POLYHEDRON (1988), 7(12), 1079-88 CODEN: PLYHDE;ISSN: 0277-5387, 1988,**

 • **CHEMICAL ABSTRACTS, vol. 107, no. 21, 23.November 1987 Columbus, Ohio, US; abstract no. 198579, CAI, SHIANG ET AL: "Synthesis and structural characterization of tetraneopentyldioxodi-.mu.-oxodirhenium and the lithium(1+) and tetraethylammonium salts of the dineopentyldioxorhenate(1-) anion" XP002069571 & INORG. CHEM. (1987), 26(22), 3693-700 CODEN: INOCAJ;ISSN: 0020-1669, 1987,**

 • **CHEMICAL ABSTRACTS, vol. 67, no. 6, 7.August 1967 Columbus, Ohio, US; abstract no. 28878, SCHMIDT, MAX ET AL: "Trimethylsilyl perrhenate" XP002069572 & INORG. SYNTH. (1967), 9, 149-51 CODEN: INSYA3, 1967,**

 • **HERRMANN, W.A. ET AL.: "Mehrfachbindungen zwischen Hauptgruppenelementen und Übergangsmetallen. XCIII. Methyl- und Ethylrheniumoxide: Präparative und strukturchemische Aspekte" JOURNAL OF ORGANOMETALLIC CHEMISTRY, Bd. 413, - 1991 Seiten 11-25, XP002069569**

**Beschreibung**

Die vorliegende Erfindung umfaßt ein neuartiges Verfahren zur Herstellung von Organorheniumoxiden aus rheniumhaltigen Verbindungen, insbesondere aus Perrhenaten, sowie der erstmalig möglich gemachten Katalysatorrezyklisierung beim Einsatz von Organorheniumoxiden in katalytischen Prozessen.

Über die Stammverbindung der Organorheniumoxide, Methyltrioxorhenium, wurde erstmals 1979 von I.A. Beattie et al. berichtet (I. A. Beattie, P. J. Jones, *Inorg. Chem.*, 18 (1979) 2318). Sie entsteht in bis zu 50 % Ausbeute durch Oxidation von Tetramethylrhenium(VI)oxid $(CH_3)_4ReO$ oder Zersetzung von Trimethyldioxorhenium(VII) $(CH_3)_3ReO_2$, wobei die Ausgangsverbindungen wochenlang trockener Luft ausgesetzt werden, um die oxidative Umsetzung zu bewirken.

Dieser Zugangsweg besitzt aufgrund der schwer zugänglichen Vorstufen und der zeitaufwendigen Synthese heute keine Bedeutung mehr. Stattdessen sind zwei alternative Wege für die Synthese von Organorhenium(VII)oxiden im Augenblick gebräuchlich, die im wesentlichen auf Arbeiten von *J. G. Kuchler* (Dissertation, TU München) aus dem Jahr 1987 zurückgehen. Beide Verfahren basieren auf kommerziell zugänglichen Rheniumheptoxid $Re_2O_7$ als Rheniumquelle. $Re_2O_7$ ist sehr stark feuchtigkeitsempfindlich, so daß die Reaktionen unter Schutzgas und mit getrockneten Lösungsmitteln durchgeführt werden müssen.

Die Direktalkylierung (Arylierung) von Rheniumheptoxid $Re_2O_7$ mit nicht reduzierenden Transferreagenzien wie Tetraalkylzinn $SnR_4$ oder Dialkylzink $ZnR_2$ führt in glatten Reaktionen zu den entsprechenden Organorheniumoxiden. Der Nachteil dieser Methode liegt darin, daß die Hälfte des Rheniums als polymeres Trialkylstannylperrhenat bzw. als Zinkperrhenat anfällt. Somit liegt die maximale theoretisch erreichbare Ausbeute bei nur 50 % (bezogen auf Rhenium). Die tatsächlich erreichte Ausbeute liegt dann bei etwa 45 %.

Wird die Alkylierung mit gemischten Estern von Perrheniumsäure und Carbonsäuren durchgeführt, können diese rheniumhaltigen Nebenprodukte vermieden werden (W. A. Herrmann et al., *Inorg. Chem.*, 31 (1992) 4431). Gemäß dieser sogenannten Anhydrid-Route werden nacheinander Rheniumheptoxid mit Carbonsäureanhydriden (bevorzugt Trifluoressigsäureanhydrid) und Tri(n-butyl)zinnverbindungen umgesetzt. Die Ausbeuten liegen hier bei 80 - 90 %, wobei allerdings - bei Anforderungen an eine hohe Reinheit - die restlose Abtrennung der entstehenden Tri(n-butyl)zinncarbon-säureanhydride vom gebildetem MTO langwierig und aufwendig ist. Die geschilderte Reaktion bleibt auf die wenig reaktiven Zinnverbindungen beschränkt, da die Verwendung der reaktiveren Zinnverbindungen nur zu unbefriedigenden Ergebnissen führt. Sie ist damit in ihrer synthetischen Bandbreite stark limitiert. Darüber hinaus erfordert sie den Einsatz relativ teurer Chemikalien.

In Herrmann, W.A. et al. (Journal of Organometallic Chemistry, Bd. 413, (1991), Seiten 11-25 wird ein Verfahren zur Herstellung von Organorheniumoxiden mit zink-, titan- und aluminiumorganischen Reagenzien beschrieben, wobei allerdings nur mäßige Ausbeuten erzielt werden.

Es war Aufgabe der vorliegenden Erfindung ein neuartiges Verfahren zur Verfügung zu stellen, mit dem Organorheniumoxide einfach und kostengünstig mit guter Ausbeute erhalten werden können.

Gelöst wird diese Aufgabe durch ein Verfahren gemäß dem eine rheniumhaltige Verbindung mit einem Silylierungsmittel und einem organylierenden Reagenz zu dem entsprechenden Organorheniumoxid umgesetzt wird.

In einer bevorzugten Ausführungsform betrifft die Erfindung ein Verfahren zur Herstellung von Verbindungen der Formel (I)

$$R_aRe_bO_cL_d \hspace{4cm} (I)$$

wobei

a = eine ganze Zahl von 1 bis 6
b = eine ganze Zahl von 1 bis 4
c = eine ganze Zahl von 1 bis 12
d = eine ganze Zahl von 0 bis 4
L = ein Lewis-basischer Ligand

und die Summe von a, b und c so ist, daß sie der Fünf- bis Siebenwertigkeit des Rheniums gerecht wird mit der Maßgabe, daß c nicht größer als 3•b ist und worin R gleich oder verschieden ist und einen aliphatischen Kohlenwasserstoffrest mit 1 bis 40 und bevorzugt von 1 bis 20 C-Atomen, einen aromatischen Kohlenwasserstoffrest mit 6 bis 40 und bevorzugt von 6 bis 20 Atomen oder Arylalkylrest mit 7 bis 40 und bevorzugt von 7 bis 20 Atomen darstellt, wobei der Rest R gegebenenfalls unabhängig voneinander gleich oder verschieden substituiert sein kann.

Beispiele für Substituenten sind Halogen, Hydroxyl, Alkoxy, Aryloxy, Alkylamino und Arylamino, Alkylphosphin, Arylphosphin, Alkylsulfonyl, Arylsulfonyl, Alkyl- und Aryl(sulfonyl)phosphin.

Durch die neuartige Direktsynthese von Organorheniumoxiden aus rheniumhaltigen Verbindungen, insbesondere Perrhenaten wie $MReO_4$, $M(ReO_4)_2$, entfallen die einleitend genannten Nachteile. So können Methyltrioxorhenium (MTO) und andere feuchtigkeitsstabile Organorheniumoxide ohne jeden Luft- oder Feuchtigkeitsausschluß in guten Ausbeuten synthetisiert werden (siehe Tabelle 1).

Geeignete rheniumhaltige Verbindungen sind insbesondere Perrhenate wie z.B. $MReO_4$ und $M(ReO_4)_2$. M kann ein beliebiges, geeignetes Gegenion sein. Beispielsweise kann M ein Ion aus der Gruppe der Alkali-, Erdalkali-, oder Nebengruppenelemente sein. Beispielsweise seien $AgReO_4$, $KReO_4$, $NaReO_4$, $Zn(ReO_4)_2$, $Ca(ReO_4)_2$, $(CH_3)_3SnReO_4$ oder auch $NH_4ReO_4$ erwähnt.

Gemäß einer weiteren Ausgestaltung der Erfindung stammt die rheniumhaltige Verbindung aus dem Katalysatorrückstand von verbrauchten Organorheniumoxidkatalysatoren oder von Re-haltigen Lösungen im allgemeinen.

Die Reaktion erfolgt in einer Eintopfreaktion in organischen Lösungsmitteln, insbesondere Donorlösungsmitteln (z. B. THF, Acetonitril).

Die gelöste oder suspendierte rheniumhaltige Verbindung wird mit einem Silylierungsmittel und einem organylierenden Agens umgesetzt.

Prinzipiell ist jedes Silylierungsmittel, das zu einer entsprechenden Umsetzung gemäß Schema 1 führt geeignet. Ein bevorzugtes Silylierungsmittel ist aufgrund seiner einfachen Zugänglichkeit Chlortrimethylsilan. Auch andere Chloralkylsilane wie Chlor-tert.-Butyldimethylsilan etc. können verwendet werden. Die Menge an Silylierungsmittel sollte im allgemeinen zumindest äquimolar zu der rheniumhaltigen Verbindung sein. Bevorzugt ist jedoch ein Überschuß, wobei eine 2 bis 2,5 Äquivalenten entsprechende Menge besonders vorteilhaft ist.

Auch das organylierende Reagenz und dessen Menge können beliebig gewählt werden, solange eine entsprechende Umsetzung gemäß Schema 1 gewährleistet ist. So ist der Einsatz jedes für derartige Zwecke bekannten organylierenden Reagenz denkbar. Geeignete Beispiele für organylierende Reagenzien sind die Organometallverbindungen des Zinns, Zinks, Aluminiums, Magnesiums, Lithiums, Kupfers, Cadmium und Quecksilbers, wobei Zinn- oder Zinkalkyle bzw. -aryle bevorzugt sind.

Entsprechend dem Silylierungsmittel sollte die Menge an organylierendem Reagenz in etwa äquimolar zu der Menge an eingesetzter rheniumhaltiger Verbindung sein, wobei ein Überschuß vorteilhaft sein kann. Vorzugsweise wird das organylierende Reagenz in einer Menge eingesetzt, die 1 bis 1,5 Äquivalenten bezogen auf die rheniumhaltige Verbindung entspricht.

Bei Bedarf können das organylierende Reagenz wie das Silylierungsmittel jedoch in geringeren bzw. höheren Mengen eingesetzt werden.

Für die Umsetzung von schwerlöslichen Perrhenaten wie Kaliumperrhenat $KReO_4$ oder Ammoniumperrhenat $NH_4ReO_4$ empfiehlt sich die Zugabe von bis zu einem Äquivalent Säure (in der Regel Schwefelsäure), um die Löslichkeit des Perrhenats zu erhöhen, wobei die Menge an zugesetzter Säure bei Bedarf auch mehr sein kann.

Der Einsatz von Zinkalkylierungsmitteln kann auch durch die in situ-Reaktion von $ZnCl_2$ mit der entsprechenden lithiumorganischen Verbindung LiR oder der entsprechenden Grignardverbindung RMgX (X = Halogenid) erfolgen.

Diese neuartige Synthesestrategie stellt einen kostengünstigen und völlig unproblematischen Zugang (keine Inertgasatmosphäre, keine wasserfreien Lösungsmittel) zu Organorheniumoxiden aus einer großen Anzahl von Edukten dar.

Wie bereits erwähnt, muß erfindungsgemäß prinzipiell nicht auf die Wasserfreiheit der verwendeten Lösungsmittel geachtet werden. Jedoch kann die Verwendung von laborüblichen trockenen Lösungsmittel von Vorteil sein. So hat sich gezeigt, daß auf diese Weise die Ausbeute noch gesteigert werden kann.

Für das erfindungsgemäße Verfahren kann die Reaktionstemperatur über einen weiten Bereich von -100 bis +110°C, insbesondere -78°C bis +80°C, gewählt werden. Üblicherweise verläuft die Reaktion jedoch unter moderaten Bedingungen, d. h. Raumtemperatur bis Refluxieren.

Es wird angenommen, daß die Reaktion über folgende Zwischenstufen abläuft (Schema 1, Beispiel Methyltrioxorhenium). Das folgende Schema dient lediglich zur Erläuterung.

$$MReO_4 \xrightarrow{1} O_3Re\text{-}O\text{-}Si(CH_3)_3$$

$$\xrightarrow{2} (CH_3)_3Si\text{-}O\text{-}Si(CH_3)_3$$

$$CH_3ReO_3 \xleftarrow{4} ClReO_3 \xleftarrow{3} Re_2O_7$$

*Schema* 1: Reaktionsmechanismus zur Bildung von Methyltrioxorhenium aus Perrhenaten

(1) Reaktion des Perrhenats mit einem Äquivalent Chlortrimethylsilan zu Trimethylsilylperrhenat (unter Bildung von schwerlöslichen Chloriden = treibende Kraft der Reaktion.

(2) Solvolyse von Trimethylsilylperrhenat unter Bildung von Rheniumheptoxid und Hexamethyldisiloxan.

(3) Spaltung von Rheniumheptoxid mit dem zweiten Äquivalent Chlortrimethylsilan zu Chlortrioxorhenium und Trimethylsilylperrhenat.

(4) Alkylierung von Chlortrioxorhenium mit Tetramethylzinn zu Methyltrioxorhenium und Trimethylzinnchlorid.

Ein herausragende Vorteil der neuen Synthesemethode ist ferner ihr Einsatz im Katalysatorrecycling abgearbeiteter Reaktionslösungen. Organorheniumoxide (vor allem Methyltrioxorhenium) sind als exzellente Katalysatoren in vielfältigen Bereichen der organischen Synthese einsetzbar. Die rege Forschungstätigkeit und die große Anzahl von Patenten in diesem Bereich zeigt, wie hoch das technische Potential dieser Katalysatoren bewertet wird.

Zu den aussichtsreichsten Kandidaten für eine industrielle Anwendung zählt die MTO-katalysierte Olefin-Epoxidierung und die MTO-katalysierten Aromatenoxidation (US 5.166.372, DE 39 02 357, EP 0380085). MTO wird durch Wasserstoffperoxid $H_2O_2$ schrittweise über einen Mono(peroxo)- in einen Bis(peroxo)rheniumkomplex übergeführt. Letzterer ist ein hocheffizienter Katalysator für die Epoxidierung eines breiten Produktspektrums an Olefinen.

Desweiteren sind folgende MTO-katalysierte Prozesse bisher patentiert bzw. in der Literatur beschrieben (Übersicht: W. A. Herrmann, J. Organomet. Chem., 500 (1995) 149): Aromatenoxidation (DE 4419799.3), Olefinisomerisierung und Olefinmetathese (DE 4228887, DE 3940196, EP 0373488 891224370).

Es läßt sich weiter eine Reihe von anderen Prozessen nennen, die durch Methyltrioxorhenium katalysiert werden können, wie Baeyer-Villiger-Oxidation, Diels-Alder-Reaktion, Olefinierung von Aldehyden und Oxidation von Metallcarbonylen, Sulfiden und vielen anderen organischen und anorganischen Substraten.

Für ein weiteres Vorantreiben der technischen Nutzung von Organorhenium-oxiden, insbesondere MTO, in den geschilderten Prozessen kommt daher der Rezyklisierung von verbrauchtem Katalysator naturgemäß eine entscheidende Bedeutung zu. Trotz der relativ hohen Toleranz mancher Organorheniumoxide z.B. von MTO bzw. des Peroxokomplexes, gegenüber gebildetem Reaktionswasser ist der vorherrschende Desaktivierungsmechanismus des Katalysators die Hydrolyse, die zur Abspaltung des organischen Restes unter Bildung der Perrheniumsäure führt, was schließlich nach der Aufarbeitung in Perrhenatsalzen endet.

Mit Hilfe des erfindungsgemäßen Verfahrens können die aus industriellen Prozessen gewonnenen Perrhenate hier direkt einer Katalysator-Neubildung zugeführt werden. Exemplarisch läßt sich das Rezyklisieren des Rheniumkatalysators am Beispiel der MTO-katalysierten Aromatenoxidation zeigen:

Die katalytische Reaktion erfolgt üblicherweise in Essigsäure als Lösungsmittel. Nach Ablauf der Reaktion kann das homogene System durch Zugabe von Wasser und einem organischen Lösungsmittel wie zum Beispiel Chloroform in ein Zwei-Phasen-System umgewandelt werden. Nach der Phasentrennung und ggf. einem Waschschritt läßt sich aus der organischen Phase das gewünschte Oxidationsprodukt isolieren, während aus der Wasserphase der Katalysator z. B. durch Zugabe eines Kaliumsalzes (bevorzugt 1 bis 3 Äquivalente Kaliumchlorid KCl oder $K_2CO_3$) als schwerlösliches Kaliumperrhenat $KReO_4$ ausfällt. Dieses kann ohne jede Reinigung für das erfindungsgemäße Verfahren eingesetzt werden.

Beispiele

Siehe auch Tabelle 1.

1. 500 mg $NaReO_4$ werden in 10 ml Acetonitril suspendiert, mit 2,2 Äquivalenten Chlortrimethylsilan sowie 1,1 Äquivalenten Tetramethylzinn versetzt und 4 h refluxiert. Danach wird die Lösung von unlöslichem Natriumchlorid abfiltriert und zur Trockne eingeengt. Die anschließende Sublimation liefert analysenreines Methyltrioxorhenium in 70 % Ausbeute.

2. 500 mg $AgReO_4$ werden in 10 ml Acetonitril gelöst, mit 2,2 Äquivalenten Chlortrimethylsilan sowie 1,1 Äquivalenten Tetramethylzinn versetzt und 12 h bei Raumtemperatur gerührt. Danach wird die Lösung von unlöslichem Silberchlorid abfiltriert und zur Trockne eingeengt. Die anschließende Sublimation liefert analysenreines Methyltrioxorhenium in 76 % Ausbeute.

3. 500 g $KReO_4$ werden in 10 ml Acetonitril suspendiert, mit 1 Äquivalent konzentrierter Schwefelsäure, 2,2 Äquivalenten Chlortrimethylsilan sowie 1,1 Äquivalenten Tetramethylzinn versetzt und 24 h bei Raumtemperatur gerührt. Danach wird die Lösung zur Trockne eingeengt und mit Pentan mehrmals extrahiert. Die vereinigten Pentanextrakte werden eingeengt und kaltgestellt. Das ausfallende Methyltrioxorhenium wird abfiltriert und gegebenenfalls noch einer Sublimation unterzogen. Es ergibt sich Methyltrioxorhenium in 70 % Ausbeute.

4. 500 mg $NH_4ReO_4$ werden in 10 ml Acetonitril suspendiert, mit 1 Äquivalent konzentrierter Schwefelsäure, 2,2 Äquivalenten Chlortrimethylsilan sowie 1,1 Äquivalenten Tetramethylzinn versetzt und 24 h bei Raumtemperatur gerührt. Danach wird die Lösung zur Trockne eingeengt und mit Pentan mehrmals extrahiert. Die vereinigten Pentanextrakte werden eingeengt und kaltgestellt. Das ausgefallene Methyltrioxorhenium wird abfiltriert und gegebenenfalls noch einer Sublimation unterzogen. Es ergibt sich Methyltrioxorhenium in 56 % Ausbeute.

5. 500 mg $NaReO_4$ werden in 10 ml trockenem Acetonitril suspendiert, mit 2 Äquivalenten Chlortrimethylsilan sowie 1 Äquivalent $Zn((CH_3)_2NC_3H_6)_2$ versetzt und 12 h bei 0°C nachgerührt. Danach wird die Lösung zur Trockne eingeengt und kaltgestellt. Dabei fällt 3-[N,N-dimethylamino-n-propyl]-trioxorhenium in 25 % Ausbeute aus der Lösung aus.

6. 9 g $KReO_4$ werden in 150 ml Acetonitril suspendiert, mit 1 Äquivalent konzentrierter Schwefelsäure, 2,2 Äquivalenten Chlortrimethylsilan sowie 1,1 Äquivalenten Tetramethylzinn versetzt und 24 h bei Raumtemperatur gerührt. Danach wird die Lösung zur Trockne eingeengt und kaltgestellt. Das ausfallende Methyltrioxorhenium wird abfiltriert und gegebenenfalls noch einer Sublimation unterzogen. Man erhält Methyltrioxorhenium in 63 % Ausbeute.

7. Die in Tabelle 1 aufgeführten Beispiele wurden analog zu den vorhergehenden Beispielen durchgeführt.

Tabelle 1

| | | | | |
|---|---|---|---|---|
| Synthese von Organorheniumoxiden aus Perrhenaten | | | | |
| | Perrhenat | Alkylierungsmittel | Bedingungen | Ausbeute in $RReO_3$ in %[1] |
| 1 | $AgReO_4$ | $(CH_3)_4Sn$ | $CH_3CN$, 12 h, RT | 76 |
| 2 | $Ca(ReO_4)_2$ | $(CH_3)_4Sn$ | $CH_3CN$, 4 h, Reflux. | 80 |
| 3 | $NaReO_4$ | $(CH_3)_4Sn$ | $CH_3CN$, 4 h, Reflux. | 70 |
| 4 | $KReO_4$ | $(CH_3)_4Sn$ | $CH_3CN$, 4 h, Reflux. | 53 |
| 5 | $KReO_4$ | $(CH_3)_4Sn$ | $CH_3CN$, 24 h, RT | 70 |
| 6 | $NH_4ReO_4$ | $(CH_3)_4Sn$ | $CH_3CN$, 4 h, Reflux. | 43 |
| 7 | $NH_4ReO_4$ | $(CH_3)_4Sn$ | $CH_3CN$, 24 h, RT | 56 |
| 8 | $Me_3SnReO_4$ | $(CH_3)_4Sn$ | $CH_3CN$, 24 h, RT | 85[2] |
| 9 | $Zn(ReO_4)_2$ | $(CH_3)_4Sn$ | $CH_3CN$, 2 h, Reflux. | 72 |
| 10 | $NaReO_4$ | $Bu_3SnCH_3$ | $CH_3CN$, 4 h, Reflux. | 46 |
| 11 | $AgReO_4$ | $ZnEt_2$ | $CH_3CN$, 12 h, 0°C | 37[2] |
| 12 | $NaReO_4$ | $Zn((CH_3)_2NC_3H_6)_2$ | $CH_3CN$, 12 h, 0°C | 25 |

[1] isolierte Ausbeute bis auf die gekennzeichneten Beispiele 8 und 11

[2] GC-Ausbeute (+/- 5 %)

**Patentansprüche**

1. Verfahren zur Herstellung von Organorheniumoxiden aus rheniumhaltigen Verbindungen, wobei die rheniumhaltige Verbindung ein Perrhenat ist und mit einem Silylierungsmittel und einem organylierenden Reagenz umgesetzt wird.

**2.** Verfahren nach Anspruch 1, wobei das Organorheniumoxid eine Verbindung gemäß der Formel (1) ist

$$R_aRe_bO_cL_d \hspace{4cm} (I)$$

wobei

a = eine ganze Zahl von 1 bis 6
b = eine ganze Zahl von 1 bis 4
c = eine ganze Zahl von 1 bis 12
d = eine ganze Zahl von 0 bis 4
L = ein Lewis-basischer Ligand

und die Summe von a, b und c so ist, daß sie der Fünf- bis Siebenwertigkeit des Rheniums gerecht wird mit der Maßgabe, daß c nicht größer als 3 b ist und worin R gleich oder verschieden ist und einen aliphatischen Kohlenwasserstoffrest mit 1 bis 20 C-Atomen, einen aromatischen Kohlenwasserstoffrest mit 6 bis 20 Atomen oder Arylalkylrest mit 7 bis 20 Atomen darstellt, wobei der Rest R gegebenenfalls unabhängig voneinander gleich oder verschieden substituiert sein kann.

**3.** Verfahren nach Anspruch 2, wobei das Perrhenat $MReO_4$ oder $M(ReO_4)_2$ ist und M ausgewählt ist unter den Elementen der Alkalimetalle, Erdalkalimetalle, der Nebengruppenelemente oder ein Ammonium ist.

**4.** Verfahren nach einem der Ansprüche 1 bis 3, wobei das Silylierungsmittel ein Chloralkylsilan ist.

**5.** Verfahren nach einem der Ansprüche 1 bis 4, wobei das organylierende Reagenz eine Organometallverbindung des Zinns, Zinks, Aluminiums, Magnesiums, Lithiums, Kupfers, Cadmiums oder Quecksilbers ist.

**6.** Verfahren nach einem der Ansprüche 1 bis 5, wobei die rheniumhaltige Verbindung aus einem verbrauchten Organorheniumoxid- oder/und Rheniumoxidkatalysator oder/und aus einer eine Rheniumverbindung, Rheniumkomplexionen oder/und Rheniumionen enthaltenden Lösung gewonnen wird.

**7.** Verfahren nach Anspruch 6, wobei der verbrauchte Organorheniumoxid- oder Rheniumoxidkatalysator als Kaliumperrhenat gewonnen wird.

**Claims**

**1.** A process for the preparation of an organorhenium oxide from a rhenium-containing compound, where the rhenium-containing compound is a perrhenate and is reacted with a silylating agent and an organylating reagent

**2.** A process according to claim 1, where the organorhenium oxide is a compound of the formula (I)

$$R_aRe_bO_cL_d \hspace{4cm} (I)$$

where

a = an integer from 1 to 6

b = an integer from 1 to 4

c = an integer from 1 to 12

d = an integer from 0 to 4

L = a Lewis base ligand

and the total of a, b and c is such as to comply with the penta- to heptavalency of rhenium, with the proviso that c is not greater than 3 b, and in which R is identical or different and is an aliphatic hydrocarbon radical having 1 to 20 carbon atoms, an aromatic hydrocarbon radical having 6 to 20 carbon atoms or arylalkyl radical having 7 to 20 carbon atoms, where the radical R can, where appropriate, be substituted identically or differently, independently of one another.

3. A process according to claim 2, where the perrhenate is $MReO_4$ or $M(ReO_4)_2$, and M is selected from the alkali metal and alkaline earth metal elements and the B group elements or is an ammonium.

4. A process according to any of claims 1 to 3, where the silylating agent is a chloroalkylsilane.

5. A process according to any one of claims 1 to 4, where the organylating reagent is an organo-metallic compound of tin, zinc, aluminium, magnesium, lithium, copper, cadmium or mercury.

6. A process according to any one of claims 1 to 5, where the rhenium-containing compound is obtained from a spent organorhenium oxide catalyst and/or rhenium oxide catalyst and/or from a solution containing a rhenium compound, rhenium complex ions and/or rhenium ions.

7. A process according to claim 6, where the spent organorhenium oxide catalyst or rhenium oxide catalyst is obtained as potassium perrhenate.

**Revendications**

1. Procédé de production d'oxydes d'organe-rhénium à partir de composés contenant du rhénium, où le composé contenant du rhénium est un perrhénate et est mis à réagir avec un agent de silylation et un réactif organylant.

2. Procédé selon la revendication 1,
dans lequel l'oxyde d'organe-rhénium est un composé selon la formule (I)

$$R_aRe_bO_cL_d \qquad\qquad (I)$$

dans laquelle

a = un nombre entier allant de 1 à 6
b = un nombre entier allant de 1 à 4
c = un nombre entier allant de 1 à 12
d = un nombre entier allant de 0 à 4
L = un ligand à base de composé de Lewis

et la somme et a, b et c est telle qu'elle satisfait à la penta- à heptavalence du rhénium sous réserve que c n'est pas supérieur à 3 b,
et où R est identique ou différent et représente un radical hydrocarboné aliphatique comportant de 1 à 20 atomes de carbone, un radical hydrocarboné aromatique comportant de 6 à 20 atomes de carbone ou un radical arylalkyle comportant de 7 à 20 atomes, ou le radical R peut être le cas échéant, de manière indépendante, substitué de manière identique ou différente.

3. Procédé selon la revendication 2,
dans lequel le perrhénate est $MReO_4$ ou $M(ReO_4)_2$ et M est choisi parmi les éléments des métaux alcalins, des métaux alcalino-terreux, des éléments de groupe secondaire ou est un ammonium.

4. Procédé selon l'une des revendications 1 à 3,
dans lequel l'agent de silylation est un chloroalkylsilane.

**5.** Procédé selon l'une des revendications 1 à 4,
dans lequel le réactif organylant est un composé organo-métallique de l'étain, du zinc, de l'aluminium, du magnésium, du lithium, du cuivre, du cadmium ou du mercure.

**6.** Procédé selon l'une des revendications 1 à 5,
dans lequel le composé contenant du rhénium est obtenu à partir d'un catalyseur d'oxyde d'organo-rhénium et/ou d'oxyde de rhénium usé et/ou d'une solution contenant un composé de rhénium, des ions complexes de rhénium et/ou des ions rhénium.

**7.** Procédé selon la revendication 6,
dans lequel le catalyseur d'oxyde d'organo-rhénium ou d'oxyde de rhénium usé est obtenu sous forme de perrhénate de potassium.